# EUROPÄISCHE PATENTANMELDUNG

(11) **EP 1 359 296 A2**
(43) Veröffentlichungstag der Anmeldung: **05.11.2003**
(21) Anmeldenummer: 03008427.1
(22) Anmeldetag: 11.04.2003
(51) Int. Cl.: F01P 7/16, F16K 11/052

(54) **Duo-Proportionalventil**

(30) Priorität: 03.05.2002 DE 10220002
(71) Anmelder: ROBERT BOSCH GMBH, 70442 Stuttgart (DE)
(72) Erfinder: Schmitt, Manfred, 64646 Heppenheim (DE); Mann, Karsten, 70469 Stuttgart (DE); Kaefer, Oliver, 71711 Murr (DE)

(57) **Zusammenfassung**

Die Erfindung betrifft ein Ventil, insbesondere ein Ventil zur Steuerung von Volumenströmen im Heiz- und Kühlsystem eines Kraftfahrzeugs, mit einem Ventilgehäuse und einer Ventilkammer, von der zumindest drei Strömungskanäle abzweigen, sowie mit mindestens zwei, in der Ventilkammer angeordneten, um eine zugehörige Achse drehbaren Drosselkörpern, die mit je einem Ventilsitz der Ventilkammer zusammenwirken.

Erfindungsgemäß ist vorgesehen, dass die Stellung der Drosselkörper in der Ventilkammer voneinander unabhängig positionierbar ist.

## Beschreibung

### Stand der Technik

Die Erfindung geht aus von einem Ventil zur Steuerung von Volumenströmen bzw. von einem Kühl- und/oder Heizkreislauf mit einem solchen Ventil, insbesondere in einem Kraftfahrzeug, nach den Oberbegriffen der unabhängigen Ansprüche.

Ein Kühl- bzw. Heizkreislauf eines Kraftfahrzeuges beinhaltet in der Regel eine zu kühlende Wärmequelle, beispielsweise den Fahrzeugmotor, die mittels eines Kühlmediums durch freie oder erzwungene Konvektion gekühlt werden soll. Die Temperaturdifferenz über der Wärmequelle ist vom Wärmeeintrag und von der Größe des Volumenstroms des Kühlmittels abhängig, während die absolute Temperatur des Kühlmediums durch den Wärmeeintrag der Wärmequelle, die Wärmeabfuhr über etwaige, im Kühlkreislauf befindliche Kühlerelemente und die Wärmekapazitäten der beteiligten Materialien bestimmt wird.

Um den Verbrennungsmotor eines Kraftfahrzeuges vor dem Überhitzen zu schützen und die Abwärme des Motors gegebenenfalls zur Heizung des Fahrgastraumes nutzen zu können, wird im Kühl- und Heizkreislauf des Fahrzeuges ein Kühlmittel umgepumpt, das die überschüssige Wärme des Motors aufnehmen und im gewünschten Maße abführen kann. Ein solcher Kühl- bzw. Heizkreislauf eines Kraftfahrzeuges umfasst im Allgemeinen, verschiedene, miteinander verbundene Teilzweige, wie beispielsweise einen Kühlerzweig, einen Bypasszweig zur Umgehung des Kühlers oder auch einen Heizungswärmetauscher-Zweig. So kann beispielsweise über einen Kühlerzweig überschüssige Wärmemenge des Kühlmittels an die Umgebung abgegeben werden oder über den Heizungswärmetauscher-Zweig einem Heizungswärmetauscher zur weiteren Nutzung zugeführt werden. Die Verteilung des Kühlmittelstroms auf die verschiedenen Teilzweige des Kühl- und Heizkreislaufes eines Kraftfahrzeuges wird typischer Weise über eine Reihe von Ventilen gesteuert. So kann beispielsweise die gewünschte Kühlmitteltemperatur durch Mischen eines gekühlten und eines ungekühlten Kühlmittelstroms eingestellt werden.

Im Bereich der Kraftfahrzeugentwicklung wird derzeit intensiv an Konzepten für ein effizienteres Wärmemanagement im Fahrzeug gearbeitet. Hierbei geht es u. a. auch um eine bedarfsgerechte Ansteuerung beziehungsweise Regelung des Motorkühlsystems mit dem Ziel, den Kraftstoffverbrauch und die Emissionen des Verbrennungsmotors zu verringern, um Abgasgrenzwerte einhalten zu können bzw. den Komfort des Fahrzeuges zu erhöhen. Dabei dürfen kritische Grenzen der thermischen Bauteilbelastung nicht überschritten werden. Dies kann durch eine Optimierung des Kühlmittelvolumenstroms und die lastabhängige Regelung des Temperaturniveaus des Motors erreicht werden.

Zur bedarfsgerechten Regelung, d. h. zur Erzielung einer optimierten Verteilung der Kühlmittelströme im Kühl- bzw. Heizkreislauf werden daher im Rahmen eines Thermomanagements für das Kraftfahrzeug seit einiger Zeit steuerbare Ventile vorgeschlagen, die die bisherigen Thermostatventile in Zukunft ersetzen sollen. Aus der DE 35 16 502 A1 ist eine Temperatur-Regeleinrichtung für das Kühlmittel einer Brennkraftmaschine bekannt, die in der Vorlaufleitung bzw. der Bypassleitung eines Kühlkreislaufs ein Kühlmittelsteuerventil aufweist, welches in Abhängigkeit, beispielsweise der Kühlmitteltemperatur, mittels eines Stellmotors betätigbar ist. Der Stellmotor besteht aus einem elektrischen Stellantrieb, dessen abgangseitiges Stellorgan getrieblich mit einem Ventilverschluss des Kühlmittelsteuerventils verbunden ist. Dem Ventil ist ein Steuerglied zugeordnet, dem einzelne, von Sensoren der Brennkraftmaschine erfasste Kennfeldgrößen, insbesondere die Kühlmitteltemperatur, sowie die Außentemperatur, zugeführt werden können.

In der DE 41 09 498 A1 wird eine Vorrichtung zur Regelung der Temperatur einer Brennkraftmaschine vorgeschlagen, die mit einer Kühleinrichtung und einer, diese beeinflussenden Steuereinrichtung versehen ist. Der Steuereinrichtung der DE 41 09 498 A1 werden in Abhängigkeit von verschiedenen Betriebsparametern der Brennkraftmaschine unterschiedliche Temperatursollwerte vorgegeben, die als Daten im Steuergerät abgelegt sind. Darüber hinaus existiert im Steuergerät ein so genannter Sollwertgeber, der der Steuereinrichtung in Abhängigkeit von verschiedenen Einsatzbedingungen des Kraftfahrzeuges unterschiedliche Bereiche, beispielsweise von Temperatursollwerten, vorgibt.

Aus der EP 0 904 506 B1 ist ein Drehschieber und Ventilsitzring bekannt, dessen spezielle Ausgestaltung zu einer Verbesserung der Abdichtung sowie der Strömungscharakteristik eines solchen Ventils führt. Das Ventil der EP 0 904 506 B 1 weist eine Ventilkammer mit einem Einlasskanal sowie einem Auslasskanal auf, in dem ein Drehschieberelement über eine Welle angetrieben werden kann, um im Bedarfsfall den Einlasskanal des Ventils in gewünschter Weise zu verschließen. In einer speziellen Ausführungsform des Ventils der EP 0 904 506 B 1 ist ein zusätzliches, zweites Drehschieberelement auf der Antriebswelle des ersten Drehschieberelementes derart befestigt, dass, unabhängig von der Stellung des ersten Drehschieberelementes, die Strömungscharakteristik im Auslasskanal des Ventils der Strömungscharakteristik im Einlasskanal des Ventils entspricht. Auf diese Weise wird in dem Ventil der EP 0 904 506 B 1 verhindert, dass es aufgrund von unterschiedlichen Strömungscharakteristiken in der Ventilkammer des Ventils zu einer unerwünschten Geräuschbildung bzw. zu ungewünschten, da nachteiligen Strömungsverhältnissen kommen kann.

Ausgehend vom Stand der Technik liegt der vorliegenden Erfindung die Aufgabe zugrunde, in einem Kühl- bzw. Heizkreislaufs, insbesondere eines Kraftfahrzeuges mittels eines Ventils eine bedarfsgerechte Regelung und insbesondere eine optimierte Verteilung der Kühlmittelströme im Kühl- bzw. Heizkreislauf zu ermöglichen.

### Vorteile der Erfindung

Das erfindungsgemäße Ventil mit den Merkmalen des unabhängigen Anspruchs 1 hat gegenüber dem Stand der Technik den Vorteil, dass von einer funktionalen Einheit aus sowohl der Kühlmittelvolumenstrom durch den Motor als auch das Temperaturniveau geregelt werden kann. Eine elektronisch gesteuerte Hauptwasserpumpe ist dadurch nicht unbedingt notwendig. So kann mit dem erfindungsgemäßen Ventil der Volumenstrom durch den Kühlerzweig sowie der Volumenstrom durch den Bypasszweig des Kühlkreislaufes des Verbrennungsmotors unabhängig voneinander angedrosselt werden. Auf diese Weise ist es möglich, die Volumenströme im Kühl- beziehungsweise Heizkreislauf individuell zu vermindern und dabei ein gewünschtes Mischverhältnis der Volumenströme und damit ein entsprechendes Temperaturniveau einzuregeln. Eine Totalabsperrung der vom Ventil abzweigenden Teilkreisläufe ist in vorteilhafter Weise mit dem erfindungsgemäßen Ventil ebenso möglich.

In vorteilhafter Weise lässt sich ein solches, erfindungsgemäßes Ventil realisieren, indem die im Ventil angeordneten Drosselkörper, die die Volumenströme durch die Strömungskanäle beeinflussen, voneinander unabhängig positionierbar sind.

Ein Kühl- und/oder Heizkreislauf mit einem solchen, erfindungsgemäßen Ventil, das eine exakte, bedarfsgerechte Einstellung der Kühlmittelvolumenströme ermöglicht, kann beispielsweise zu einem reduzierten Kraftstoffverbrauch des Verbrennungsmotors sowie zu einem verringerten Schadstoffausstoß und einer verbesserten Lebensdauer des Motors eines Kraftfahrzeuges beitragen. Im Speziellen lässt sich durch ein gezieltes Thermomanagement des Kühl- und/oder Heizkreislaufes eines Fahrzeuges auch der Wirkungsgrad des Antriebsmotors verbessern.

Durch die in den abhängigen Ansprüchen aufgeführten Maßnahmen sind vorteilhafte Weiterbildungen und Verbesserungen des in den unabhängigen Ansprüchen angegebenen Ventils bzw. des beanspruchten Kühl- und/oder Heizsystems mit einem solchen Ventil möglich.

In einer vorteilhaften Ausgestaltung des erfindungsgemäßen Ventils ist jedem Drosselkörper des Ventils ein Aktuator zugeordnet, der die Positionierung der Stellung des zugeordneten Drosselkörpers in der Ventilkammer des erfindungsgemäßen Ventils vornimmt.

In vorteilhafter Weise ist die, eine Wirkverbindung zwischen dem Aktuator und dem zu stellenden Drosselkörper herstellende Antriebswelle exzentrisch in der Ventilkammer des erfindungsgemäßen Ventils angeordnet. Da der Drosselkörper des erfindungsgemäßen Ventils aufgrund der exzentrischen Anordnung der Antriebswelle und der damit verbundenen, kombinierten Dreh- und Hubbewegung des Drosselkörpers, das Ventilgehäuse beim Schließen oder Öffnen des Ventils nur im Ventilsitz berührt, ist dieses Ventil sehr unempfindlich gegenüber Verschmutzungen im zu regulierenden Volumenstrom. Das erfindungsgemäße Ventil ist in seiner Konstruktion einfach und kostengünstig, weist jedoch eine geringe Verschleißempfindlichkeit und eine hohe Unempfindlichkeit gegenüber festen Bestandteilen im zu regelnden Fluid auf. Speziell diese festen Bestandteile, wie beispielsweise Formsand, verursachen in Kühl- und Heizungskreisläufen des Standes der Technik Undichtigkeiten und einen erhöhten Verschleiss an den Ventilen.

In einem speziellen Ausführungsbeispiel des erfindungsgemäßen Ventils sind die Antriebswellen der in der Ventilkammer angeordneten Drosselkörper fluchtend zueinander angeordnet. Durch eine entsprechende Wellenlagerung können die Antriebswellen gegeneinander fixiert werden. Auf diese Weise ist es möglich, ein kompaktes Ventilgehäuse zur realisieren, bei dem beispielsweise die, den Drosselkörpern zugeordneten Aktuatoren aufeinander gegenüberliegenden Seiten des Ventilgehäuses angeordnet sein könnten.

In einer alternativen, vorteilhaften Ausgestaltung des erfindungsgemäßen Ventils können die Antriebswellen der Drosselkörper konzentrisch zueinander in der Ventilkammer angeordnet sein. So ist es beispielsweise möglich für einen Drosselkörper eine Hohlwelle zu benutzen, in deren Innenraum eine zweite Welle zum Antrieb eines zweiten Drosselkörpers verläuft.

Ein sicheres Schließen der Strömungskanäle lässt sich in vorteilhafter Weise dadurch realisieren, dass der regelnde Drosselkörper einen Dichtkopf sowie ein mit der jeweiligen Antriebswelle verbundenes Ventilgestänge aufweist. Der Ventildichtkopf ist dabei beweglich gegenüber dem Ventilgestänge ausgebildet. Durch die relative Beweglichkeit des Ventildichtkopfes gegenüber dem Ventilgestänge kann sich der Dichtkopf in gewissen Maßen selbstständig ausrichten und in seiner Lage optimal an den Ventilsitz der Ventilkammer anpassen. Damit können Toleranzen im Winkel und Abstand des Drosselkörpers zum Ventilsitz aufgefangen und ausgeglichen werden. Beispielsweise lässt sich ein Kugelgelenk zwischen dem Ventildichtkopf und dem Ventilgestänge integrieren, so dass eine zweiachsige relative Beweglichkeit des Dichtkopfes gegenüber dem Ventilsgestänge gegeben ist. In vorteilhafter Weise ist durch diese spezielle Ausgestaltung des erfindungsgemäßen Ventils nicht nur eine automatische Anpassung der Abdichtung bei Temperatur- oder Druckänderungen im Kühlsystem möglich, sondern auch ein selbstständiges Nachstellen des Ventils aufgrund von Verschleiß und Abrieb ist so ebenfalls automatisch realisierbar.

In vorteilhafter Weise weisen die Aktuatoren zur Stellung der Drosselkörper des erfindungsgemäßen Ventils einen Stellantrieb auf, der beispielsweise durch einen Elektromotor mit einem nachgeschalteten Getriebe realisiert sein kann. Auf diese Weise ist es möglich, eine sehr genaue Ansteuerung der Drosselkörper und damit Regelung der Volumenströme zu erreichen. Der Elektromotor wiederum lässt sich durch ein Steuersignal, das beispielsweise aus der Motortemperatur abgeleitet wird, regeln. Damit ist die exakte Einstellung der jeweiligen Durchflussmengen und der sich daraus ergebenden Kühlmitteltemperaturen im Kuhl- und Heizsystem des Fahrzeuges möglich. Die Reaktions- und Steuerzeiten der aktiven Kühlflüssigkeitsregelung können so in vorteilhafter Weise deutlich reduziert werden. Der Kühlmittelfluss lässt sich beispielsweise direkt der jeweiligen Motorlast anpassen und der Wirkungsgrad des Motors kann auf diese Weise situationsabhängig optimiert werden.

In vorteilhafter Weise wird das Ventil über eine Steuereinheit derart geregelt, dass der durch das Ventil gestellte Volumenstrom direkt proportional zu einer Stellgröße des Ventils ist. Der Antrieb des Ventils stellt in Abhängigkeit eines Sollwertes die Öffnung der Strömungskanäle so ein, dass der Volumenstrom möglichst linear proportional zur Stellgröße ist. Die Stellgrößen für das Ventil werden in vorteilhafter Weise aus den Betriebsparametern des Kühl- und Heizungskreislaufes und insbesondere aus den Betriebsparametern des Verbrennungsmotors abgeleitet. So können Temperatursensoren die aktuelle Motortemperatur bzw. die Kühlmitteltemperatur und ggf. auch Umgebungsparameter des Antriebsmotors beziehungsweise des Fahrzeuges an die Steuereinheit weiterleiten, die diese Werte beispielsweise mit theoretischen Modellen der Motortemperatur vergleicht. Wird eine Abweichung der momentanen Ist-Temperatur von der optimalen Soll-Temperatur ermittelt, so errechnet die Steuereinheit einen neuen Stellwert für das Ventil, der zu einer Anpassung der Ist-Temperatur an die gewünschte Soll-Temperatur führt.

Neben den reinen Temperaturdaten können selbstverständlicher Weise auch weitere Parameter, insbesondere des Verbrennungsmotors, für die aktive Ventilstellung herangezogen werden.

In vorteilhafter Weise lässt sich so mit dem erfindungsgemäßen Ventil ein Kühlund/oder Heizkreislauf mit mehreren Freiheitsgraden realisieren. So ist es auf einfache Weise möglich, mit einer einzelnen funktionalen Einheit sowohl den Kühlmittelvolumenstrom durch den Motor als auch das Temperaturniveau zu regeln.

### Zeichnung

In der Zeichnung sind mehrere Ausführungsbeispiele des erfindungsgemäßen Ventils dargestellt, die in der nachfolgenden Beschreibung näher erläutert werden. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:
- Fig. 1: ein Kühlsystem für einen Verbrennungsmotor in vereinfachter schematischer Darstellung unter Verwendung eines erfindungsgemäßen, elektrisch angetriebenen Ventils,
- Fig. 2: ein Ausführungsbeispiel eines erfindungsgemäßen Ventils mit aufgeschnittenem Ventilgehäuse,
- Fig. 3: eine vereinfachte, schematische Darstellung eines erfindungsgemäßen Ventils mit zugehörigen Aktuatoren in perspektivischer Gesamtansicht,
- Fig. 4: eine vereinfachte, schematische Darstellung eines alternativen Ausführungsbeispiels für ein erfindungsgemäßes Ventil im Querschnitt.

### Beschreibung der Ausführungsbeispiele

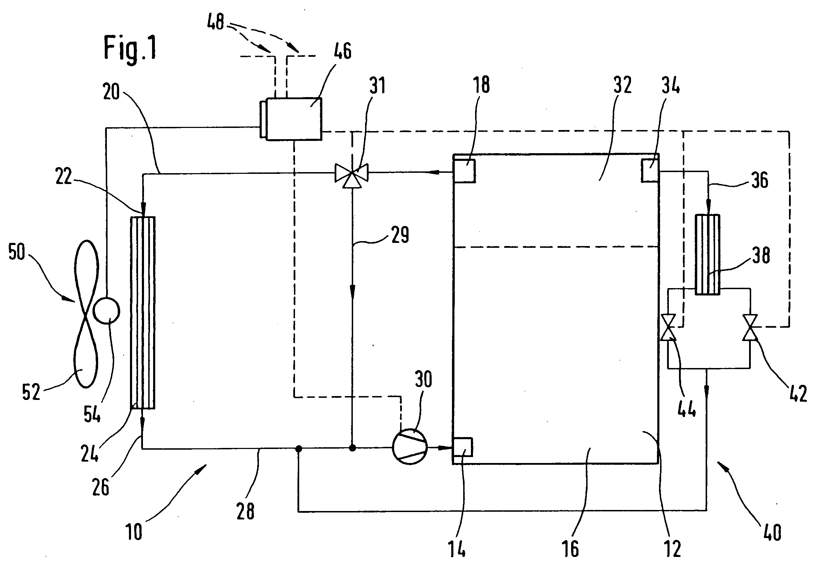

In Fig. 1 ist in vereinfachter, schematischer Darstellung ein Kühl- und Heizkreislauf 10 zur Kühlung eines Verbrennungsmotors 12 dargestellt. Der Motor 12 verfügt über einen ersten Kühlmitteleinlass 14 im Bereich seines Motorblocks 16, sowie über einen ersten Kühlmittelauslass 18, der über eine Rücklaufleitung 20 und einen Kühlereinlass 22 mit einem Kühler 24 des Kühlkreislaufs 10 verbunden ist. Der Kühler 24 ist wiederum über einen Kühlerauslass 26 und eine Verbindungsleitung 28 mit dem Kühlmitteleinlass 14 des Verbrennungsmotors 12 verbunden.

Zur Umwälzung des Kühlmittels im Kühlkreislauf 10 des Verbrennungsmotors 12 befindet sich in der Verbindungsleitung 28 eine Kühlmittelpumpe 30, die im Ausführungsbeispiel der Fig. 1 elektronisch geregelt ist. Rein mechanische Kühlmittelpumpen sind in anderen Ausführungsbeispielen für einen erfindungsgemäßen Kühl- und Heizkreislauf aber ebenso möglich.

Im Bereich des Zylinderkopfes 32 des Verbrennungsmotors 12 befindet sich ein zweiter Kühlmittelauslass 34 der über eine Verbindungsleitung 36 mit einem Heizungswärmetauscher 38 eines Heizungsteilzweiges 40 verbunden ist. In diesem Heizungszweig 40 wird ein Teil des aus dem Motor 12 austretenden, erwärmten Kühlmittels genutzt, um über den Heizungswärmetauscher 38, die im heißen Kühlmittel gespeicherte Wärmeenergie zur Beheizung, beispielsweise eines in Fig. 1 nicht weiter dargestellten Fahrzeuginnenraumes, zu nutzen. Die bedarfsgerechte Regelung der Heizfunktion ist in Fig. 1 schematisch nur durch die gesteuerten Heizungsventile 42 bzw. 44 angedeutet.

Von der Rücklaufleitung 20 des Kühl- und Heizkreislaufs 10 zweigt eine Bypassleitung 29 ab, die parallel zum Kühlerelement 24 verläuft und die Rücklaufleitung 20 direkt mit der Verbindungsleitung 28 zwischen dem Kühlerauslass 26 und dem Kühlmitteleinlass 14 des Motors verbindet. Zur Regelung der relativen Volumenströme durch das Kühlerelement 24 einerseits, beziehungsweise die Bypassleitung 29 andererseits, ist im dargestellten Ausführungsbeispiel eines Kühl- und Heizkreislaufs nach der Fig. 1 ein Dreiwegebypassventil 31 vorgesehen, welches von einem Steuergerät 46 angesteuert und geregelt wird.

Die Heizungsventile 42 bzw. 44 des Heizungsteilzweiges 40 werden im Ausführungsbeispiel des Kühl- und Heizungskreislaufs 10 gemäß Fig. 1 ebenso wie das Bypassventil 31 über das Steuergerät 46 angesteuert und geregelt. Das Steuergerät 46, welches beispielsweise auch das Motorsteuergerät des Fahrzeugs sein kann, ist mit diversen Sensoren verbunden, die in Fig. 1 der Übersicht halber nicht dargestellt sind und lediglich durch elektrische Verbindungsleitungen 48 angedeutet sind. Über diese Sensoren werden dem Steuergerät 46 aktuelle Parameter des Kühlkreislaufs bzw. des Motors zugeleitet, die dann mit einer im Steuergerät abgelegten Bedatung verglichen werden können, um daraus entsprechende Stellgrößen für die aktiven Komponenten des Kühl- und Heizkreislaufs 10 zu ermitteln. Neben den Parametern des Kühlkreislaufs 10, wie beispielsweise der Kühlmitteltemperatur, wird auch die Motortemperatur, und insbesondere die Motortemperatur an verschiedenen temperaturkritischen Stellen des Motors, an das Steuergerät 46 übermittelt. Als weitere Eingangssignale für das Steuergerät können darüber hinaus auch der Kraftstoffverbrauch, sowie die Schadstoffemission des Verbrennungsmotors über entsprechende Sensoren an das Steuergerät übermittelt werden.

Das Steuergerät 46 dient im Ausführungsbeispiel der Fig.1 gleichzeitig der bedarfsgerechten Ansteuerung eines Kühlgebläses 50, welches zur Erhöhung der Kühlleistung des Kühlsystems dem Kühler 24 des Kühlkreislaufs zugeordnet ist. Das Kühlgebläse 50 besteht aus einem Lüfter 52 und einem den Lüfter antreibenden Motor 54, der seine Ansteuerungsdaten und die Energieversorgung über entsprechende, elektrische Verbindungsleitungen vom Steuergerät 46 erhält. Darüber hinaus regelt das Steuergerät 56 unter Anderem auch die Leistung der Kühlmittelpumpe 30.

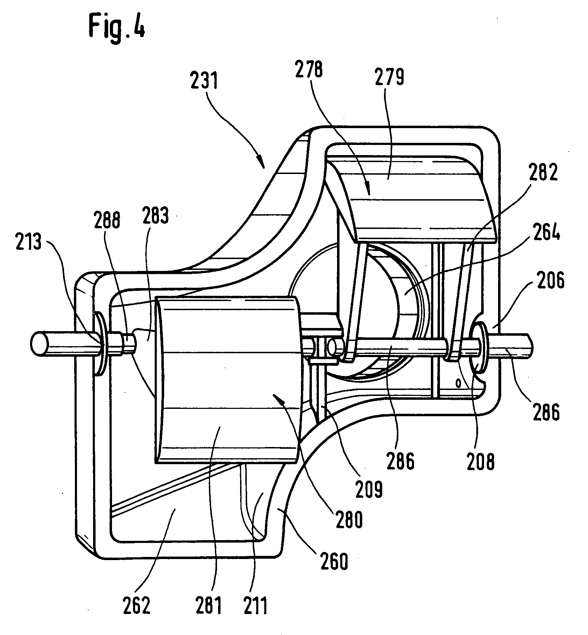

Im Speziellen wird vom Steuergerät 46 jeweils eine Stellgröße für die Aktuatoren der Ventile 31, 42 und 44 sowie weiterer, in der vereinfachten Darstellung eines Kühlkreislaufs nach Fig. 4 nicht dargestellter Ventile errechnet, um die aktuelle Motor-Ist-Temperatur auf eine optimale Motor-Soll-Temperatur einzuregeln. Die Ansteuerung der Aktuatoren der erfindungsgemäßen Ventile des Kühl- und Heizkreislaufs 10 geschieht derart, dass der durch die Ventile geregelte Volumenstrom möglichst linear proportional zu der Stellgröße für den jeweiligen Aktuator ist. Auf diese Weise lassen sich die Ventile in exakter Weise nach den Vorgaben des Steuergerätes stellen, so dass der Kühlmittelvolumenstrom sehr genau an die Vorgaben, beispielsweise eines in der Steuereinheit 46 abgelegten zeitabhängigen Temperaturmodels für den Motor angepasst werden kann. Zur Einstellung der optimalen Motortemperatur wird mit Hilfe der erfindungsgemäßen, steuerbaren Ventile der relative Kühlmittelvolumenstrom durch den Kühler 24 bzw. durch die Bypassleitung 29 geregelt. So kann beispielsweise in der Startphase des Motors 12 die Verbindungsleitung 20 zum Motorkühler 24 vollständig geschlossen werden und das Bypassventil 31 in Richtung der Bypassleitung 29 gegebenenfalls vollständig oder aber auch nur geringfügig geöffnet werden. Auf diese Weise ist eine schnelle Erreichung der optimalen Arbeitstemperatur des Motors 12 möglich, so dass die Betriebsbedingungen des geringeren Kraftstoffverbrauchs sowie der geringeren Schadstoffemission des Motors frühzeitig erreicht werden können. Nach Erreichen der optimalen Motortemperatur wird die Kühlerzuleitung 20 durch das Bypassventil 31 geöffnet und die Bypassleitung 29 kann in entsprechendem Maße geschlossen werden, um die überschüssige, durch den Motor 12 erzeugte Wärmeenergie über das Kühlerelement 24 sowie das Kühlgebläse 50 an die Umgebung abgeben zu können. Ebenso ist es möglich, über das Bypassventil 31 sowohl die Bypassleitung 29, als auch die Zuleitung zum Kühler gleichzeitig vollständig zu verschließen.

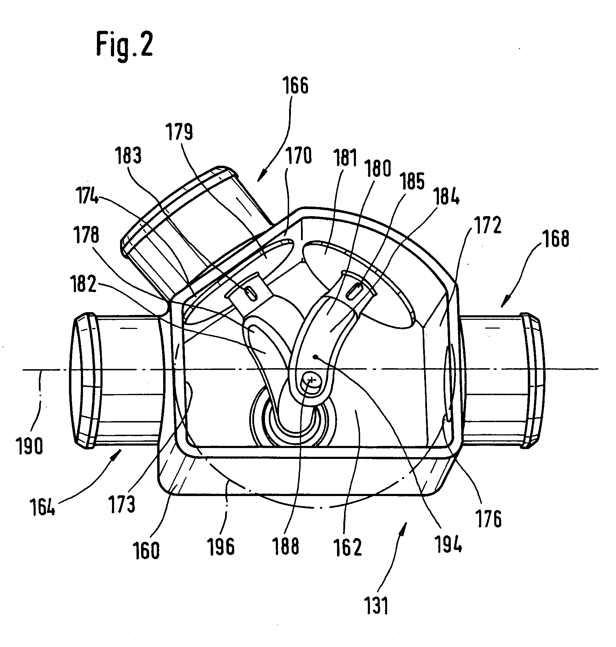

In Fig. 2 ist ein erstes Ausführungsbeispiel für ein erfindungsgemäßes Ventil entsprechend dem Bypassventil 31 in Fig. 1 dargestellt. Fig. 2 zeigt das erfindungsgemäße Ventil 131 mit einem Ventilgehäuse 160 sowie mit einer Ventilkammer 162, in die ein Einlasskanal 164, ein erster Auslasskanal 166 sowie ein zweiter Auslasskanal 168 führt. Die Ventilkammer 162 weist zwei, innenseitig angeordnete Ventilsitze 170 bzw. 172 auf, die im dargestellten Ausführungsbeispiel des erfindungsgemäßen Ventils einstückig mit dem Ventilgehäuse 160 ausgeformt sind. Die Ventilsitze 170 bzw. 172 umgeben jeweils eine Ventilöffnung 174 bzw. 176, die die Ventilkammer 162 mit den Auslasskanälen 166 bzw. 168 des Ventils verbindet.

In der Ventilkammer 162 befinden sich zwei Drosselkörper 178 bzw. 180, die jeweils über ein Ventilgestänge 182 bzw. 184 drehbar mit einer Welle 186 bzw. 188 verbunden sind. Die Wellen 186 bzw. 188 der Drosselkörper 178 bzw. 180 sind exzentrisch in der Ventilkammer 162 angeordnet, so dass die Wellen 186 bzw. 188 die Längsachse 190 zwischen dem Einlasskanal 164 und dem zweiten Auslasskanal 168 nicht schneidet, sondern um eine Strecke von dieser beabstandet ist. (Die zueinander fluchtenden Achsen der Wellen 186 bzw. 188 verlaufen nicht durch den Mittelpunkt 194 eines Kreises 196 der der Ventilkammer einzuschreiben ist, und auf dessen Umfang sich in etwa sowohl die Einlassöffnung 173 als auch die Ventilöffnungen 174 bzw. 176 anordnen.)

Im Zusammenspiel mit den Ventilsitzen 170 bzw. 172 können die Drosselkörper 178 bzw. 180 die Ventilöffnungen 174 bzw. 176 unabhängig voneinander öffnen und schließen. Dazu sind die Ventilgestänge 182 bzw. 184 der beiden Drosselkörper ineinander verdrehbar und unabhängig voneinander gelagert. Die Antriebswelle 186 des ersten Drosselkörpers 178, der beispielsweise den Volumenstrom durch eine Bypassleitung, entsprechend der Bypassleitung 29 der Fig. 1, regeln kann, wird auf der einen, in der Darstellung der Fig. 2 auf der unteren, nicht dargestellten Seite des Ventilgehäuses, aus dem Gehäuse herausgeführt. Die Antriebswelle 188 des zweiten Drosselkörpers 180, der beispielsweise den Volumenstrom durch das Kühlerelement 24 gemäß der Fig. 1 regeln kann, wird auf der, der ersten Welle gegenüberliegenden Seite des Ventilgehäuses 160 aus diesem herausgeführt. Die Drosselkörper sind dabei so dimensioniert, dass sie nicht kollidieren, sondern aneinander vorbeigeschwenkt werden können.

Die Drosselkörper 178 bzw. 180 bestehen im dargestellten Ausführungsbeispiel der Fig. 2 jeweils aus einem Ventildichtkopf 179 bzw. 181 und dem Ventilgestänge 182 bzw. 184, das den jeweiligen Ventildichtkopf mit der zugeordneten Antriebswelle 186 bzw. 188 verbindet. Der Ventildichtkopf 179 bzw. 181 ist gegenüber dem zugeordneten Ventilgestänge 182 bzw. 184 beweglich ausgeformt. Im Ausführungsbeispiel der Fig. 2 ist die Verbindung zwischen dem Ventildichtkopf und dem zugeordneten Ventilgestänge durch ein Kugelgelenk 183 bzw. 185 realisiert. Durch die relative Beweglichkeit des Ventildichtkopfes gegenüber dem Ventilgestänge kann sich der Dichtkopf selbstständig ausrichten und in seiner Lage an den zugehörigen Ventilsitz des Ventilgehäuses anpassen. Auf diese Art können Toleranzen im Winkel und Abstand des Drosselkörpers zum Ventilsitz des erfindungsgemäßen Ventils aufgefangen und ausgeglichen werden. Mit Hilfe des Kugelgelenks 183 bzw. 185 ist insbesondere eine zweiachsige Beweglichkeit des Ventildichtkopfes 179 bzw. 181 gegenüber dem zugeordneten Ventilgestänge 182 bzw. 184 gegeben, so dass ein optimaler, da selbstständiger und kontinuierlicher Ausgleich vorhandener Toleranzfehler im erfindungsgemäßen Ventil somit in hohem Maße gewährleistet ist.

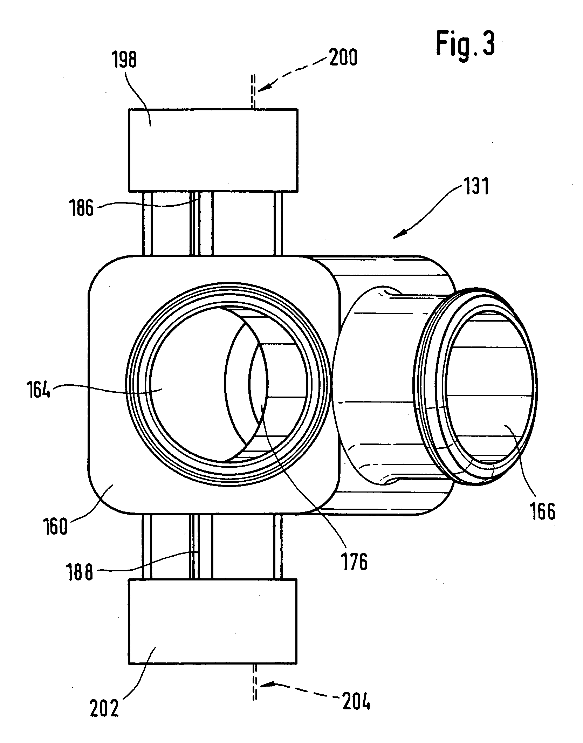

Die Fig. 3 zeigt eine mögliche Ausführungsform des Ventilgehäuses 160 des erfindungsgemäßen Ventils in einer Außenansicht. In Fig. 3 ist eine gegenüber Fig. 2 um 90° gedrehte Gesamtansicht eines erfindungsgemäßen Ventils schematisch dargestellt. Sichtbar ist die Einlassöffnung 164 sowie der erste Auslasskanal 166. Nicht zu sehen in dieser perspektivischen Darstellung des Ventilgehäuses ist der zweite Auslasskanal 168, der sich an die Ventilöffnung 176 anschließt. Fig. 3 zeigt die aus dem Ventilgehäuse 160 herausgeführte Antriebswelle 186 des ersten Drosselkörpers 178. Die Antriebswelle 186 steht mit einem ersten Aktuator 198 in Verbindung, der in Fig. 3 lediglich schematisch dargestellt ist. Der Aktuator kann, wie in Fig. 3 angedeutet, als separates Bauteil ausgeformt sein und auf dem Ventilgehäuse beabstandet befestigt sein, oder aber in anderen Ausführungsformen des erfindungsgemäßen Ventils auch direkt in das Ventilgehäuse integriert sein. Im Ausführungsbeispiel der Fig. 3 wird der erste Aktuator gebildet durch einen Stellantrieb, insbesondere durch einen Elektromotor, der über eine entsprechende Getriebeübersetzung den Drosselkörper 178 vermittels der Antriebswelle 186 stellt. Der Aktuator 198 ist zu diesem Zweck über entsprechende elektrische Verbindungsleitungen 200 mit einem Steuergerät, wie beispielsweise dem Steuergerät 46 in Fig. 1, verbunden,

Auf der dem ersten Aktuator 198 gegenüberliegenden Seite des Ventilgehäuses 160 ist die zweite, dem Drosselkörper 180 zugeordnete, Antriebswelle 188 des erfindungsgemäßen Ventils aus dem Ventilgehäuse 160 herausgeführt. Entsprechend ist auf dieser Gehäuseseite ein zweiter Aktuator 202 für diese zweite Antriebswelle auf dem Ventilgehäuse befestigt. Dieser zweite Aktuator 202 ist ebenfalls über entsprechende elektrische Verbindungsleitungen 204 mit einem zugeordneten Steuergerät verbunden, welches die erforderlichen Stellgrößen für den Antriebsmotor des zweiten Aktuators übermittelt.

Da die Durchführungen der Antriebswellen sowohl am Ventilgehäuse als auch bei den beiden Aktuatoren entsprechende Abdichtungsmaßnahmen für die drehbaren Antriebswellen erfordern, ist es auch möglich, die Aktuatoren derart in das Ventilgehäuse zu integrieren, dass beispielsweise die Getriebeübersetzung oder Teile des antreibenden Motors mit dem zu regelnden Fluidstrom direkt in Verbindung stehen. So lässt sich beispielsweise ein nasslaufender, bürstenloser Gleichstrommotor in vorteilhafter Weise zum Antrieb der Wellen 186 bzw. 188 nutzen, um auf diese Weise den Aufwand der verschleißanfälligen, dynamischen Wellendichtungen zu reduzieren. Andere dem Fachmann bekannte Möglichkeiten zur Abdichtung der Antriebswellen können ebenfalls in vorteilhafter Weise bei dem erfindungsgemäßen Ventil genutzt werden.

In Fig. 4 ist ein weiteres Ausführungsbeispiel für ein erfindungsgemäßes Ventil dargestellt. Das in Fig. 4 in aufgeschnittener Weise dargestellte Ventil 231 hat ein Ventilgehäuse 260 mit einer Ventilkammer 262, in der sich eine erste Welle 286 sowie eine zweite Welle 288 befinden. Die Ventilkammer 262 weist einen Einlasskanal 264 und zwei Auslasskanäle 266 bzw. 268 auf, von denen in Fig. 4 nur der Einlasskanal 264 der zugehörigen Ventilöffnung zu sehen ist. Der erste Auslasskanal 266 wird durch den ersten Drosselkörper 278 gesteuert und befindet sich ebenso wie der zweite Auslasskanal 268 auf der dem Einlasskanal 264 gegenüberliegenden Seite der Antriebswellen 286 bzw. 288.

Im Ausführungsbeispiel der Fig. 4 ist der erste Drosselkörper 278 einstückig ausgebildet. Ein zusätzliches Gelenk zwischen dem Ventilgestänge 282 und dem Ventildichtkopf 279, derart wie in Fig. 2 bereits beschrieben, ist aber ebenso möglich. Der erste Drosselkörper 278 wird über die erste Welle 286 gestellt. Die Welle 286 ist gelagert in einem Wellenlager 206, das gleichzeitig der Durchführung der Antriebswelle 286 aus dem Ventilgehäuse 260 dient. Zur Abdichtung der Wellendurchführung ist eine Dichtscheibe 208 vorgesehen. Das zweite, sich innerhalb der Ventilkammer 262 befindende Ende der Antriebswelle 286 wird geführt durch ein Wellenlager 209, welches seinerseits wiederum an einer Gehäusewand 211 des Ventilgehäuses 260 befestigt ist.

Das Wellenlager 209 nimmt zugleich auch das zweite, sich innerhalb der Ventilkammer 262 befindliche Ende, der zweiten Antriebswelle 288 auf. Die Antriebswelle 288 steuert in entsprechender Weise den zweiten Drosselkörper 280. Der Ventildichtkopf 281 des zweiten Drosselkörpers 280 ist über ein Ventilgestänge283 mit der Antriebswelle 288 verbunden. Die Antriebswelle 288 wird über eine entsprechende Öffnung im Ventilgehäuse 260 und eine zugeordnete Wellendichtung 213 aus dem Ventilgehäuse 260 herausgeführt.

Die beiden Antriebswellen 286 bzw. 288 der den Volumenstrom einregelnden Drosselkörper sind im Ausführungsbeispiel der Fig. 4 fluchtend zueinander angeordnet, so dass diese in einem gemeinsamen Wellenlager 209 in der Ventilkammer 262 gelagert werden können. Dieses gemeinsame Wellenlager 209 reduziert den Aufwand zur Wellenführung der beiden Antriebswellen. Das jeweilige, dem gemeinsamen Wellenlager entgegengesetzte Ende der Antriebswellen 286 bzw. 288 ist aus dem Ventilgehäuse 260 herausgeführt und kann mit einer entsprechenden Stelleinheit verbunden werden. Dies kann insbesondere auch ein direkt mit dem Ventilgehäuse verbundener Elektromotor sein, der über eine entsprechende Übersetzung, beispielsweise ein Getriebe, die von einem Steuergerät erhaltenen Stellgrößen über die Antriebswellen 286 bzw. 288 auf die Drosselkörper 278 beziehungsweise 280 überträgt.

Das erfindungsgemäße Ventil ist nicht beschränkt auf die in den Zeichnungen dargestellten Ausführungsbeispiele.

Insbesondere ist das erfindungsgemäße Ventil nicht beschränkt auf die Verwendung als Bypassventil in einem Kühl- und/oder Heizungskreislauf eines Kraftfahrzeuges.

Das erfindungsgemäße Ventil kann in entsprechender Weise ebenfalls genutzt werden beispielsweise als Duo-Heizungsventil zur Regelung der Heizleistung, beispielsweise eines Fahrzeuginnenraums.

Das erfindungsgemäße Ventil ist nicht beschränkt auf die Ausführungsform eines Exzenterventils.

Das erfindungsgemäße Ventil ist nicht beschränkt auf eine Ausführungsform mit lediglich drei Strömungskanälen. Die entkoppelte Verstellbarkeit von mehreren Drosselkörpern in einem Ventil durch eine entsprechenden Anzahl von Antrieben ist auch für andere Ventilprinzipien beziehungsweise Ventile mit mehr als drei Strömungskanälen realisierbar.

Das erfindungsgemäße Ventil ist nicht beschränkt auf die in den Ausführungsbeispielen dargestellte Anordnung der Antriebswellen. So ist es beispielsweise auch möglich, koaxial bzw. ineinander verlaufende Antriebswellen für die zu stellenden Drosselkörper zu benutzen. Auf diese Weise ist es insbesondere möglich, die Anordnung der Aktuatoren für die Antriebswellen lediglich auf einer Gehäuseseite des erfindungsgemäßen Ventils zu realisieren.

## Patentansprüche

1. Ventil zur Steuerung von Volumenströmen im Heiz- und Kühlsystem (10) eines Kraftfahrzeuges, mit einem Ventilgehäuse (160;260) und einer Ventilkammer (162;262), von der zumindest drei Strömungskanäle (164,166,168;264,266,268) abzweigen, sowie mit mindestens zwei, in der Ventilkammer (162;262) angeordneten, um eine zugehörige Achse drehbaren Drosselkörpern (178,180;278,280), die mit je einem Ventilsitz (170,172;270,272) der Ventilkammer (162;262) zusammmenwirken, **dadurch gekennzeichnet, dass** die Stellung der Drosselkörper (178,180;278,280) in der Ventilkammer (162;262) voneinander unabhängig positionierbar ist.

2. Ventil nach Anspruch 1, **dadurch gekennzeichnet, dass** jedem Drosselkörper (178,180;278,280) ein Aktuator (198,202) zur Positionierung der Stellung des Drosselkörpers (178,180;278,280) in der Ventilkammer (162;262) zugeordnet ist.

3. Ventil nach Anspruch 2, **dadurch gekennzeichnet, dass** zumindest ein Aktuator (198,202) mit dem zugehörigen Drosselkörper (178,180;278,280) über eine Antriebswelle (186,188;286,288) verbunden ist, die exzentrisch in der Ventilkammer (162;262) angeordnet ist.

4. Ventil nach Anspruch 3, **dadurch gekennzeichnet, dass** zumindest eine zweite Antriebswelle (186,188;286,288) für einen Drosselkörper (178,180;278,280) vorhanden ist, wobei die Antriebswellen (186,188;286,288) der Drosselkörper (178,180;278,280) zueinander fluchtend in der Ventilkammer (162;262) angeordnet sind.

5. Ventil nach Anspruch 3 oder 4, **dadurch gekennzeichnet, dass** die Antriebswellen (186,188;286,288) der Drosselkörper (178,180;278,280) konzentrisch zueinander angeordnet sind.

6. Ventil nach einem der vorhergehenden Ansprüche, **dadurch gekennzeichnet, dass** zumindest ein Drosselkörper (178,180;278,280) einen Dichtkopf (179,181;279,281) und ein, den Ventildichtkopf (179,181;279,281) mit der Antriebswelle (186,188;286,288) verbindendes Ventilgestänge (182,184;282,284) aufweist.

7. Ventil nach Anspruch 6, **dadurch gekennzeichnet, dass** der Ventildichtkopf (179,181;279,281) beweglich gegenüber dem Ventilgestänge (182,184;282,284) ausgebildet ist.

8. Ventil nach einem der vorhergehenden Ansprüche 2 bis 7, **dadurch gekennzeichnet, dass** zumindest ein Aktuator (198,202) einen ansteuerbaren Stellantrieb umfasst.

9. Ventil nach Anspruch 8, **dadurch gekennzeichnet, dass** der Stellantrieb einen Elektromotor, insbesondere einen Elektromotor mit einem Getriebe aufweist.

10. Ventil nach einem der vorhergehenden Ansprüche, **dadurch gekennzeichnet, dass** die in der Ventilkammer (162;262) angeordneten Drosselkörper (178,180;278,280) durch entsprechende Stellgrößen, zumindest einer, mit dem Ventil in Verbindung stehenden Steuereinheit (46), derart steuer- und/oder regelbar sind, dass der Volumenstrom in den Strömungskanälen des Ventils im Wesentlichen proportional zu den Stellgrößen der Drosselkörper (178,180;278,280) ist.

11. Ventil nach Anspruch 10, **dadurch gekennzeichnet, dass** in der Steuereinheit (46) mindestens eine Kennlinie zur Ansteuerung der Drosselkörper (178,180;278,280) abgelegt ist, die es ermöglicht, die Drosselkörper (178,180;278,280) des Ventils derart anzusteuern, dass der Volumenstrom in den Strömungskanälen des Ventils proportional zu den Stellgrößen der zugehörigen Drosselkörper (178,180;278,280) ist.

12. Kühl- und Heizkreislauf (10) mit mindestens einer Wärmequelle (12), insbesondere einem Verbrennungsmotor, einem, von einem Kühlmittel durchströmten Kühler (24) und einer Bypassleitung (29), die einen Kühlerzulauf (20) des Kühlers (24) unter Umgehung des Kühlers (24) mit einem Kühlerrücklauf (28) verbindet und an deren mindestens einer Abzweigung mindestens ein Steuerventil (31) angeordnet ist, das den Kühlmittelvolumenstrom zwischen dem Kühlerzulauf (20) und der Bypassleitung (29) in Abhängigkeit von Betriebsparametern und/oder Umgebungsparametern der Wärmequelle (12) entsprechend den Stellgrößen einer Steuereinheit (46) aufteilt, **dadurch gekennzeichnet, dass** das Steuerventil (31) zumindest zwei, voneinander unabhängig elektrisch stellbare Drosselkörper (178,180;278,280) aufweist.

13. Kühl- und Heizkreislauf (10) nach Anspruch 12, **dadurch gekennzeichnet, dass** in der Steuereinheit (346) mindestens eine Kennlinie zur Ansteuerung des Ventils (31) abgelegt ist, die es erlaubt, die Drosselkörper (178,180;278,280) derart anzusteuern, dass die Volumenströme durch das Ventil (31) proportional zu den Stellgröße der Drosselkörper (178,180;278,280) ist.
